# EUROPÄISCHE PATENTSCHRIFT

(11) **EP 3 992 510 B1**
(45) Veröffentlichungstag und Bekanntmachung des Hinweises auf die Patenterteilung: **07.08.2024**
(21) Anmeldenummer: 21201957.4
(22) Anmeldetag: 11.10.2021
(51) Int. Cl.: F16L 13/08

(54) **FLUIDVERBINDUNGSANORDNUNG**
FLUID CONNECTION ASSEMBLY
ENSEMBLE DE RACCORDEMENT DE FLUIDE

(30) Priorität: 29.10.2020 DE 102020128531
(43) Veröffentlichungstag der Anmeldung: 04.05.2022
(73) Patentinhaber: VERITAS AG, 63571 Gelnhausen (DE)
(72) Erfinder: GEIGER, Berthold, 63589 Linsengericht (DE); PASCUZZI, Sergio, 63589 Linsengericht (DE); WALTER, Andreas, 63584 Gruendau (DE)
(74) Vertreter: Patentship Patentanwaltsgesellschaft mbH

(56) Entgegenhaltungen:
- WO-A1-2017/168882
- DE-A1- 102015 104 538
- FR-A- 1 133 503
- US-A1- 2017 114 932
- US-A1- 2019 309 877

## Beschreibung

Die vorliegende Erfindung betrifft ein Fluidverbindungsanordnung zum Herstellen einer Fluidverbindung.

In einem Fahrzeug wird eine Vielzahl von Fluidleitungen, wie z.B. Fluidrohre, benötigt, um unterschiedliche Arten von Fluid zu leiten. Um Fluidleitungen in einem räumlich begrenzten Bauraum eines Fahrzeuges miteinander zu verbinden, werden Fluidverbindungsanordnungen verwendet, durch welche Fluidverbindungen hergestellt werden können. In herkömmlichen aus metallischen Bauteilen bestehenden Fluidverbindungsanordnungen werden die fluidtechnischen Schnittstellen oftmals verlötet, um eine stabile Befestigung der Bauteile aneinander zu erreichen.

Zur Sicherstellung der Spaltbreite beim Löten müssen insbesondere Rohrenden einer herkömmlichen Fluidverbindungsanordnung, die in eine Anschlussgeometrie eingelötet werden, oftmals aufwendig kalibriert werden. Eine entsprechende herkömmliche Kalibrierung erfolgt insbesondere mittels einer Bördelmaschine durch Reduktion des Außendurchmesser des Rohrendes auf ein definiertes Maß, wobei hierbei hohe Umformkräfte auftreten, sowie eine Relativbewegung zwischen den Werkstücken und ein Beölen der Werkstücke notwendig wird, wobei ferner die Gefahr des Ablösens von Metallpartikel besteht, und wobei ferner vor dem Löten die Werkstücke zu reinigen und zu entfetten sind.

Die Druckschrift DE 10 2016 206 471 A1 offenbart eine Verbindungsanordnung zwischen einer Welle und einer Bohrung, wobei die Verbindung mittels eines Pressvorgangs und einem nachfolgenden Lötvorgang herstellbar ist.

Die Druckschrift WO 2017/168882 A1 offenbart ein Schaltventil in einem Kühlkreislauf.

Die Druckschrift US 2019/0309877 A1 offenbart eine Fluidverbindung.

Es ist die der Erfindung zugrundeliegende Aufgabe, ein Fluidverbindungsanordnung für eine Fluidverbindung anzugeben, welches vorteilhafte Eigenschaften aufweist und einfach zu fertigen ist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidverbindungsanordnung zum Herstellen einer Fluidverbindung gelöst, mit einem Aufnahmeteil, welches eine Aufnahmewandung aufweist, wobei die Aufnahmewandung eine Aufnahmewandungsinnenseite aufweist, welche einen Innenraum des Aufnahmeteils begrenzt, einem rohrförmigen Verbindungsteil, welches zumindest abschnittsweise in dem Innenraum des Aufnahmeteils aufgenommen ist, und welches eine Rohrwandung aufweist, wobei die Rohrwandung eine Mehrzahl von kammförmigen Stützstellen aufweist, welche sich entlang einer Längsrichtung des rohrförmigen Verbindungsteils erstrecken, wobei die kammförmigen Stützstellen die Aufnahmewandungsinnenseite kontaktieren, wobei die Rohrwandung zumindest einen gekrümmten Wandungsbereich aufweist, welcher sich zwischen zwei benachbarten kammförmigen Stützstellen erstreckt, wobei zwischen dem zumindest einen gekrümmten Wandungsbereich des rohrförmigen Verbindungsteils und der Aufnahmewandungsinnenseite des Aufnahmeteils zumindest ein Spalt angeordnet ist, wobei in dem Spalt ein Lot aufgenommen ist, um eine stoffschlüssige und fluiddichte Verbindung zwischen der Aufnahmewandungsinnenseite und dem gekrümmten Wandungsbereich sicherzustellen.

Dadurch wird beispielsweise der technische Vorteil erreicht, dass eine stabile und insbesondere fluiddichte Verbindung zwischen dem Aufnahmeteil und dem rohrförmigen Verbindungsteil sichergestellt wird, welche einfach zu fertigen ist, und hohen Druckbelastungen vorteilhaft widerstehen kann.

Insbesondere weist das Aufnahmeteil, insbesondere die Aufnahmewandung des Aufnahmeteils, eine Einschuböffnung auf, welche den Innenraum des Aufnahmeteils mit einem Außenraum des Aufnahmeteils verbindet. Insbesondere erstreckt sich das zumindest abschnittsweise in dem Innenraum des Aufnahmeteils aufgenommene rohrförmige Verbindungsteil von dem Innenraum des Aufnahmeteils durch die Einschuböffnung zu dem Außenraum des Aufnahmeteils.

Insbesondere weist die Aufnahmewandung des Aufnahmeteils einen konzentrischen Querschnitt, insbesondere einen kreisförmigen Querschnitt, auf. Somit begrenzt die Aufnahmewandungsinnenseite der Aufnahmewandung des Aufnahmeteils insbesondere einen zylinderförmigen Hohlraum, in welchem das rohrförmige Verbindungsteil zumindest abschnittsweise aufgenommen ist, und in welchem das Lot zur stoffschlüssigen und fluiddichten Verbindung zwischen der Aufnahmewandungsinnenseite und der Rohrwandung des rohrförmigen Verbindungsteils aufgenommen ist.

Insbesondere ist das Aufnahmeteil als ein hohlzylinderförmiges Bauteil geformt, wobei die Aufnahmewandung eine Aufnahmewandungsaußenseite aufweist, welche auf einer der Aufnahmewandungsinnenseite abgewandten Seite der Aufnahmewandung geformt ist und die Aufnahmewandung gegenüber einem Außenraum des Aufnahmeteils abgrenzt. Hierbei umläuft die Aufnahmewandungsaußenseite die Aufnahmewandungsinnenseite insbesondere kreisförmig, d.h. konzentrisch, so dass insbesondere der Abstand zwischen der Aufnahmewandungsinnenseite und der Aufnahmewandungsaußenseite entlang des Umfangs des Aufnahmeteils konstant ist.

Insbesondere ist das Aufnahmeteil als ein metallisches Aufnahmeteil geformt und ist das rohrförmige Verbindungsteil als ein metallisches rohrförmiges Verbindungsteil geformt. Somit kann durch das in dem Spalt aufgenommene Lot eine wirksame stoffschlüssige Verbindung, insbesondere Lötverbindung, zwischen dem metallischen Aufnahmeteil und dem metallischen rohrförmigen Verbindungsteil bereitgestellt werden.

Damit das Lot in den Spalt eindringen kann, wird zum Herstellen der Lötverbindung ein Lot, insbesondere Kupferlot, welches insbesondere zwischen dem Aufnahmeteil und dem rohrförmigen Verbindungsteil angeordnet ist, insbesondere zwischen einer Stirnseite des rohrförmigen Verbindungsteils und einer der Stirnseite des rohrförmigen Verbindungsteils gegenüberliegenden Wandungsendseite der Aufnahmewandung des Aufnahmeteils angeordnet ist, aufgeschmolzen, insbesondere durch Temperatureinwirkung auf die Fluidverbindungsanordnung. Alternativ kann das Lot auch an einer Außenseite des Aufnahmeteils und/oder des rohrförmigen Verbindungsteils angeordnet sein, insbesondere als Lotstück oder als Lotpaste.

Das aufgeschmolzene Lot dringt aufgrund der wirkenden Kapillarkraft in den zumindest einen Spalt zwischen der Rohrwandung des rohrförmigen Verbindungsteils und der Aufnahmewandungsinnenseite des Aufnahmeteils ein und härtet bei einem anschließenden Abkühlen der Fluidverbindungsanordnung aus, so dass das in dem Spalt aufgenommene und ausgehärtete Lot die stoffschlüssige und fluiddichte Verbindung zwischen der Aufnahmewandungsinnenseite und der Rohrwandung bereitstellt.

Die Rohrwandung des rohrförmigen Verbindungsteils weist insbesondere einen rotationssymmetrischen Querschnitt auf. Der rotationssymmetrische Querschnitt der Rohrwandung ist insbesondere dadurch definiert, dass eine Querschnittskontur der Rohrwandung durch eine Rotation um einen bestimmten Rotationswinkel, insbesondere von 120°, wieder auf sich selbst abgebildet wird. Insbesondere ist der rotationssymmetrische Querschnitt der Rohrwandung des rohrförmigen Verbindungsteils nicht konzentrisch, d.h. nicht kreisförmig.

Die Rohrwandung weist drei kammförmige Stützstellen, auf, welche insbesondere umfangsseitig beabstandet an der Rohrwandung angeordnet sind und sich entlang der Längsrichtung des rohrförmigen Verbindungsteils erstrecken.

Die kammförmigen Stützstellen sind in Bezug auf eine Mittelachse des rohrförmigen Verbindungsteils rotationsymmetrisch angeordnet, d.h. bei drei kammförmigen Stützstellen schließen jeweils benachbarte kammförmige Stützstellen mit der Mittelachse des rohrförmigen Verbindungsteils einen Rotationswinkel von 120° ein.

Dadurch, dass sich die kammförmigen Stützstellen entlang der Längsrichtung des rohrförmigen Verbindungsteils erstrecken, wird nicht nur ein punktuelles Anliegen der kammförmigen Stützstellen an der Aufnahmewandungsinnenseite des Aufnahmeteils sichergestellt, sondern die jeweilige Kammoberseite der kammförmigen Stützstellen liegt entlang eines länglichen Kontaktabschnitts an der Aufnahmewandungsinnenseite des Aufnahmeteils an.

Insbesondere kontaktieren die kammförmigen Stützstellen die Aufnahmewandungsinnenseite des Aufnahmeteils kraftschlüssig.

Insbesondere weisen die kammförmigen Stützstellen jeweils eine abgerundete Kammoberseite auf, welche an der Aufnahmewandungsinnenseite des Aufnahmeteils anliegt.

Insbesondere weist die Rohrwandung eine Mehrzahl von, insbesondere drei, gekrümmten Wandungsbereichen auf, wobei jeweils ein Wandungsbereich der Mehrzahl von Wandungsbereichen sich zwischen zwei benachbarten kammförmigen Stützstellen erstreckt. Insbesondere sind die gekrümmten Wandungsbereiche in Bezug auf eine Mittelachse des rohrförmigen Verbindungsteils rotationsymmetrisch angeordnet, d.h. z.B. bei drei gekrümmten Wandungsbereichen schließen jeweils zwei benachbarte gekrümmte Wandungsbereiche mit der Mittelachse des rohrförmigen Verbindungsteils einen Rotationswinkel von 120° ein.

Somit bilden die Mehrzahl von kammförmigen Stützstellen und die zwischen jeweils benachbarten kammförmigen Stützstellen angeordneten gekrümmten Wandungsbereiche insbesondere die umlaufende Rohrwandung des rohrförmigen Verbindungsteils.

Weist die Rohrwandung eine Mehrzahl von gekrümmte Wandungsbereichen auf, so ist zwischen jeweils einem gekrümmten Wandungsbereich der Mehrzahl von gekrümmten Wandungsbereichen und der Aufnahmewandungsinnenseite des Aufnahmeteils jeweils ein Spalt angeordnet, so dass in der Fluidverbindungsanordnung eine Mehrzahl von Spalten zur Aufnahme des Lots zur Verfügung stehen.

Die Mehrzahl der Spalten sind in Bezug auf eine Mittelachse des rohrförmigen Verbindungsteils rotationsymmetrisch angeordnet, d.h. bei drei Spalten schließen jeweils zwei benachbarte Spalte mit der Mittelachse des rohrförmigen Verbindungsteils einen Rotationswinkel von 120° ein.

Insbesondere ist der zumindest eine gekrümmte Wandungsbereich als ein konvex gekrümmter Wandungsbereich geformt, d.h. der konvex gekrümmte Wandungsbereich ist in Bezug auf einen Rohrinnenraum des rohrförmigen Verbindungsteils nach außen gekrümmt.

Die Rohrwandung des rohrförmigen Verbindungsteils weist eine gewisse Federelastizität auf, so dass beim Einführen des rohrförmigen Verbindungsteils in das Aufnahmeteil die kammförmigen Stützstellen beim Kontakt mit der Aufnahmewandungsinnenseite des Aufnahmeteils zumindest abschnittsweise nach innen ausgelenkt werden, so dass ein wirksames Einführen des rohrförmigen Verbindungsteils in das Aufnahmeteil sichergestellt wird.

Ist das rohrförmige Verbindungsteil in das Aufnahmeteil eingeführt, so beaufschlagen die nach innen ausgelenkten kammförmigen Stützstellen die Aufnahmewandungsinnenseite des Aufnahmeteils mit einer Kraft. Dadurch wird das rohrförmigen Verbindungsteil nach dem Einschieben in das Aufnahmeteil lagerichtig fixiert und sowohl ein Lösen des rohrförmigen Verbindungsteils von dem Aufnahmeteil als auch ein Verdrehen des rohrförmigen Verbindungsteils gegenüber dem Aufnahmeteil wird verhindert.

Wird anschließend das rohrförmige Verbindungsteil mit dem Aufnahmeteil verlötet, wird das Lot in den zumindest einen Spalt zwischen dem rohrförmigen Verbindungsteil und dem Aufnahmeteil aufgenommen und die stoffschlüssige und fluiddichte Verbindung zwischen dem rohrförmigen Verbindungsteil und dem Aufnahmeteil wird sichergestellt.

Der zumindest eine Spalt weist eine Halbmondform auf.

Insbesondere beträgt die radiale Tiefe des Spaltes quer zur Längsrichtung des rohrförmigen Verbindungsteils zwischen 0,02 mm und 0,2 mm.

Insbesondere beträgt die Wandstärke der Rohrwandung des rohrförmigen Verbindungsteils zwischen 0,5 mm und 1,2 mm, insbesondere 1,0 mm oder 0,7 mm.

Insbesondere ist das Lot aus Kupfer gebildet.

Die Rohrwandung umfassend die kammförmigen Stützstellen und den zumindest einen gekrümmten Wandungsbereich wird durch ein selektives Pressen der Rohrwandung radial nach innen dargestellt, wobei die kammförmigen Stützstellen, da sie im Durchmesser größer sind, nach innen verlagert werden, so dass sich der zumindest eine gekrümmte Wandungsbereich nach außen formt.

Die Vorteile der erfindungsgemäßen Lötverbindung zwischen dem rohrförmigen Verbindungsteil und dem Aufnahmeteil zeichnen sich dadurch aus, dass im Vergleich zu herkömmlichen Lötverbindungen geringere Umformkräfte im Vergleich zu einer herkömmlichen Kalibrierung des Außendurchmessers auftreten, da es zu keiner Änderung der Wandstärke der Rohrwandung des rohrförmigen Verbindungsteils kommt, so dass der Fertigungsaufwand signifikant reduziert werden kann, da keine Bördelmaschine verwendet werden muss. Zudem kommt es bei der Herstellung des rohrförmigen Verbindungsteils zu keiner Relativbewegung zwischen dem rohrförmigen Verbindungsteil und der Umformmatrize, wobei die Umformmatrize insbesondere durch die das rohrförmige Verbindungsteil zur Kalibrierung des Außendurchmessers beim Bördelprozess hindurchgeführt wird. Zudem kann bei der Herstellung des rohrförmigen Verbindungsteils das Schmieren und das sich daran anschließende Waschen des rohrförmigen Verbindungsteils entfallen.

In einer vorteilhaften Ausführungsform sind die kammförmigen Stützstellen beim Einführen des rohrförmigen Verbindungsteils in das Aufnahmeteil zumindest abschnittsweise nach innen verformbar, um das rohrförmige Verbindungsteil in dem Aufnahmeteil aufzunehmen, und/oder sind die kammförmigen Stützstellen des in dem Aufnahmeteil aufgenommenen rohrförmigen Verbindungsteils ausgebildet, die Aufnahmewandungsinnenseite des Aufnahmeteils mit einer Kraft zu beaufschlagen.

Dadurch wird der technische Vorteil erreicht, dass eine Positionierung des rohrförmigen Verbindungsteils innerhalb des Innenraums des Aufnahmeteils sichergestellt wird. Insbesondere wird eine vorteilhafte lagerichtige Positionierung sichergestellt, welche ein Lösen des rohrförmigen Verbindungsteils von dem Aufnahmeteil, bzw. eine Verdrehung des rohrförmigen Verbindungsteils gegenüber dem Aufnahmeteil verhindert, bevor das rohrförmigen Verbindungsteil mit dem Aufnahmeteil verlötet wird.

In einer vorteilhaften Ausführungsform sind die kammförmigen Stützstellen in Bezug auf eine Mittelachse des rohrförmigen Verbindungsteils rotationssymmetrisch angeordnet, und/oder sind eine Mehrzahl von gekrümmten Wandungsbereichen in Bezug auf eine Mittelachse des rohrförmigen Verbindungsteils rotationssymmetrisch angeordnet.

Dadurch wird der technische Vorteil erreicht, dass durch die rotationssymmetrische Anordnung der kammförmigen Stützstellen und/oder der Mehrzahl von gekrümmten Wandungsbereichen der umfangsseitige Abstand zwischen den kammförmigen Stützstellen, bzw. der umfangsseitige Abstand zwischen den Spalten, welche durch die gekrümmten Wandungsbereiche begrenzt sind, konstant ist, so dass in Bezug auf die Mittelachse symmetrische Kontaktpunkte, bzw. Lötpunkte mit der Aufnahmewandungsinnenseite des Aufnahmeteils sichergestellt werden.

In einer vorteilhaften Ausführungsform liegen die kammförmigen Stützstellen in Bezug auf die Mittelachse des rohrförmigen Verbindungsteils auf einem ersten Umfangskreis des rohrförmigen Verbindungsteils, wobei jeweilige Mittenbereiche einer Mehrzahl von gekrümmten Wandungsbereichen in Bezug auf die Mittelachse des rohrförmigen Verbindungsteils auf einem zweiten Umfangskreis des rohrförmigen Verbindungsteils liegen, wobei der erste Umfangskreis einen ersten Kreisdurchmesser aufweist, welcher größer als ein zweiter Kreisdurchmesser des zweiten Umfangskreises ist.

Dadurch wird der technische Vorteil erreicht, dass durch den Unterschied zwischen dem ersten und zweiten Kreisdurchmesser die kammförmigen Stützstellen in Bezug auf die Mittelachse des rohrförmigen Verbindungsteils weiter außen angeordnet sind als die gekrümmten Wandungsbereiche. Bei einem konzentrischen, bzw. kreisförmigen Querschnitt der Aufnahmewandung des Aufnahmeteils wird dadurch sichergestellt, dass zwischen den gekrümmten Wandungsbereichen und der Aufnahmewandung jeweils ein Spalt geformt ist, wohingegen die kammförmigen Stützstellen an der Aufnahmewandung anliegen.

In einer vorteilhaften Ausführungsform ist eine Länge der kammförmigen Stützstellen entlang der Längsrichtung des rohrförmigen Verbindungsteils geringer als eine Länge des zumindest einen Spalts entlang der Längsrichtung des rohrförmigen Verbindungsteils.

Dadurch wird der technische Vorteil erreicht, dass das Lot, welches durch die Hohlräume zwischen den Spalten durch die Kapillarkraft nach oben gezogen wird, oberhalb der Spalte zusammenläuft und den verbleibenden Spalt mit Lot füllt.

In einer vorteilhaften Ausführungsform weist das rohrförmige Verbindungsteil einen Einführabschnitt auf, welcher vollständig in dem Innenraum des Aufnahmeteils aufgenommen ist, wobei der Einführabschnitt mit einem Außenabschnitt des rohrförmigen Verbindungsteils verbunden ist, welcher sich von dem Einführabschnitt aus erstreckt, wobei die kammförmigen Stützstellen und der zumindest eine gekrümmte Wandungsbereich der Rohrwandung in dem Einführabschnitt angeordnet sind, und wobei die Rohrwandung des Außenabschnitts insbesondere einen konzentrischen Querschnitt aufweist.

Dadurch wird der technische Vorteil erreicht, dass das rohrförmige Verbindungsteil nicht über die gesamte Länge bearbeitet werden muss, sondern nur der Einführabschnitt des rohrförmigen Verbindungsteils bearbeitet werden muss, welcher vollständig in dem Innenraum des Aufnahmeteils aufgenommen ist.

In einer vorteilhaften Ausführungsform weist die Rohrwandung umfassend die kammförmigen Stützstellen und den zumindest einen gekrümmten Wandungsbereich, insbesondere im Bereich des Einführabschnitts, eine konstante Wandungsdicke auf.

Dadurch wird der technische Vorteil erreicht, dass durch konstante Wandungsdicke der Rohrwandung Schwachstellen in der Rohrwandung vermieden werden, welche die Verbindung zwischen dem rohrförmigen Verbindungsteil und dem Aufnahmeteil beeinträchtigen könnten.

In einer vorteilhaften Ausführungsform weist die Aufnahmewandung, welche den Innenraum des Aufnahmeteils begrenzt, eine Wandungsendseite auf, welche den Innenraum quer zu einer Einschubrichtung des rohrförmigen Verbindungsteils abschließt, wobei zwischen der Wandungsendseite und einer Stirnseite des eingeführten rohrförmigen Verbindungsteils ein Hohlraum zum Aufnehmen eines Lots geformt ist.

Dadurch wird der technische Vorteil erreicht, dass durch den Hohlraum zwischen der Stirnseite des eingeführten rohrförmigen Verbindungsteils und der Wandungsendseite der Aufnahmewandung des Aufnahmeteils ein Raum zur Aufnahme von Lot bereitgestellt wird, welcher stirnseitig das rohrförmige Verbindungsteil mit dem Aufnahmeteil verbindet.

Insbesondere ist die Wandungsendseite des Aufnahmeteils mit der Aufnahmewandungsinnenseite des Aufnahmeteils verbunden, so dass die Wandungsendseite und die Aufnahmewandungsinnenseite die Rohrwandung des rohrförmige Verbindungsteil vollständig umschließen.

Der Hohlraum zwischen der Stirnseite des eingeführten rohrförmigen Verbindungsteils und der Wandungsendseite ermöglich die Aufnahme des Lots vor dem Aufschmelzen des Lots. Wird das in dem Hohlraum eingebrachte Lot aufgeschmolzen, insbesondere durch ein Erwärmen der Fluidverbindungsanordnung, insbesondere durch Ofenlötung, bzw. Induktionslötung, so dringt das aufgeschmolzene Lot aufgrund der wirkenden Kapillarkräfte in die Spalten zwischen der Rohrwandung des rohrförmigen Verbindungsteils und der Aufnahmewandungsinnenseite des Aufnahmeteils ein. Bei einem sich anschließenden Aushärten des Lots in den Spalten, insbesondere durch ein Abkühlen der Fluidverbindungsanordnung, stellt das Lot somit die stoffschlüssige und fluiddichte Verbindung zwischen der Aufnahmewandungsinnenseite und der Rohrwandung bereit.

Gemäß einem zweiten Aspekt der Erfindung wird die Aufgabe durch ein Verfahren zum Herstellen einer Fluidverbindunganordnung gelöst, umfassend die folgenden Verfahrensschritte; Bereitstellen eines Aufnahmeteils, welches eine Aufnahmewandung aufweist, wobei die Aufnahmewandung eine Aufnahmewandungsinnenseite aufweist, welche einen Innenraum des Aufnahmeteils begrenzt; Bereitstellen eines rohrförmigen Verbindungsteils, welches eine Rohrwandung aufweist, wobei die Rohrwandung eine Mehrzahl von kammförmigen Stützstellen aufweist, welche sich entlang einer Längsrichtung des rohrförmigen Verbindungsteils erstrecken, wobei die Rohrwandung zumindest einen gekrümmten Wandungsbereich aufweist, welcher sich zwischen zwei benachbarten kammförmigen Stützstellen erstreckt; Zumindest abschnittsweises Einführen des rohrförmigen Verbindungsteils in den Innenraum des Aufnahmeteils, wobei die kammförmigen Stützstellen des rohrförmigen Verbindungsteils nach dem Einführen die Aufnahmewandungsinnenseite kontaktieren, und wobei nach dem Einführen zwischen dem zumindest einen gekrümmten Wandungsbereich und der Aufnahmewandungsinnenseite zumindest ein Spalt angeordnet ist; und Verlöten der Rohrwandung des rohrförmigen Verbindungsteils mit der Aufnahmewandung des Aufnahmeteils, wobei ein während des Verlötens gebildetes Lot in den Spalt aufgenommen wird, um eine stoffschlüssige und fluiddichte Verbindung zwischen der Aufnahmewandungsinnenseite und dem gekrümmten Wandungsbereich sicherzustellen.

Dadurch wird der technische Vorteil erreicht, dass eine einfach herzustellende, stabile und fluiddichte Verbindung zwischen dem rohrförmigen Verbindungsteil und dem Aufnahmeteil sichergestellt werden kann.

In einer vorteilhaften Ausführungsform umfasst das Bereitstellen des rohrförmigen Verbindungsteils eine Pressumformung eines rohrförmigen Vorläufers mit konzentrischem Querschnitt, um eine Rohrwandung mit einem rotationssymmetrischen Querschnitt umfassend die kammförmigen Stützstellen und den zumindest einen gekrümmten Wandungsbereich zu erhalten, wobei die Pressumformung insbesondere das umfangseitige Einwirken von eine Mehrzahl von Backen eines Umformungswerkzeugs auf den rohrförmigen Vorläufer umfasst.

Dadurch wird der technische Vorteil erreicht, dass die Pressumformung des rohrförmigen Vorläufers sicherstellt, dass eine gleichmäßige Umformung sichergestellt wird und insbesondere eine konstante Wandungsdicke in dem rohrförmigen Vorläufer sichergestellt werden kann, so dass die Verwendung einer Bördelmaschine zum Entfernen etwaiger Unebenheiten oder zum Kompensieren von Fertigungsstreuungen nicht notwendig ist.

Hierbei pressen die Backen des Umformungswerkzeugs insbesondere die Rohrwandung des rohrförmigen Vorläufers zumindest abschnittsweise radial nach innen, so dass dadurch der zumindest eine gekrümmten Wandungsbereich des rohrförmigen Verbindungsteils erhalten wird, und sich durch die Volumenkonstanz die kammförmigen Stützstellen dadurch ausbilden, dass die Bereiche neben dem gekrümmten Wandungsbereich radial nach außen verlagert werden.

In einer vorteilhaften Ausführungsform sind während des Einführens des rohrförmigen Verbindungsteils in den Innenraum des Aufnahmeteils die kammförmigen Stützstellen der Rohrwandung zumindest abschnittsweise nach innen verformbar.

Dadurch wird der technische Vorteil erreicht, dass ein wirksames Einführen des rohrförmigen Verbindungsteils in den Innenraum des Aufnahmeteils sichergestellt ist.

In einer vorteilhaften Ausführungsform umfasst das Verlöten das Erhitzen des rohrförmigen Verbindungsteils und/oder des Aufnahmeteils, um ein zwischen dem rohrförmigen Verbindungsteil und dem Aufnahmeteil angeordnetes Lot zu schmelzen, wobei das geschmolzene Lot während des Verlötens in den Spalt aufgenommen wird, und ausgebildet ist, nach dem Aushärten des Lots die Rohrwandung des rohrförmigen Verbindungsteils mit der Aufnahmewandung des Aufnahmeteils durch die entstehende Lötverbindung fluiddicht zu verbinden.

Dadurch wird der technische Vorteil erreicht, dass eine wirksame Verlötung des rohrförmigen Verbindungsteils mit dem Aufnahmeteil sichergestellt wird.

Insbesondere wird das Lot vor dem Verlöten in einem Hohlraum zwischen der Stirnseite des eingeführten rohrförmigen Verbindungsteils und der Wandungsendseite des Aufnahmeteils eingebracht. Wird das in dem Hohlraum eingebrachte Lot während des Verlötens anschließend aufgeschmolzen, insbesondere durch ein Erwärmen der Fluidverbindungsanordnung, so dringt das aufgeschmolzene Lot aufgrund der wirkenden Kapillarkräfte in die Spalten zwischen der Rohrwandung des rohrförmigen Verbindungsteils und der Aufnahmewandungsinnenseite des Aufnahmeteils ein. Bei einem sich anschließenden Aushärten des Lots in den Spalten, insbesondere durch ein Abkühlen der Fluidverbindungsanordnung, stellt das Lot somit die stoffschlüssige und fluiddichte Verbindung zwischen der Aufnahmewandungsinnenseite und der Rohrwandung bereit.

Die in Bezug auf das Fluidverbindungsanordnung gemäß dem ersten Aspekt angeführten vorteilhaften Ausführungsformen gelten ebenso als vorteilhafte Ausführungsformen des Verfahrens gemäß dem zweiten Aspekt.

Ebenso gelten die vorteilhafte Ausführungsformen des Verfahrens gemäß dem zweiten Aspekt als vorteilhaften Ausführungsformen für die Fluidverbindungsanordnung gemäß dem ersten Aspekt.

Ausführungsbeispiele der Erfindung sind in den Zeichnungen dargestellt und werden im Folgenden näher beschrieben.

Es zeigen:
- Figs. 1A, 1B: Ansichten mit unterschiedlichen Perspektiven eines rohrförmigen Verbindungsteils einer Fluidverbindungsanordnung gemäß einer Ausführungsform;
- Figs. 2A, 2B: Ansichten mit unterschiedlichen Perspektiven einer Fluidverbindungsanordnung mit einem rohrförmigen Verbindungsteils und einem Aufnahmeteil gemäß einer Ausführungsform; und
- Fig. 3: ein Verfahren zum Herstellen einer Fluidverbindunganordnung gemäß einer Ausführungsform.

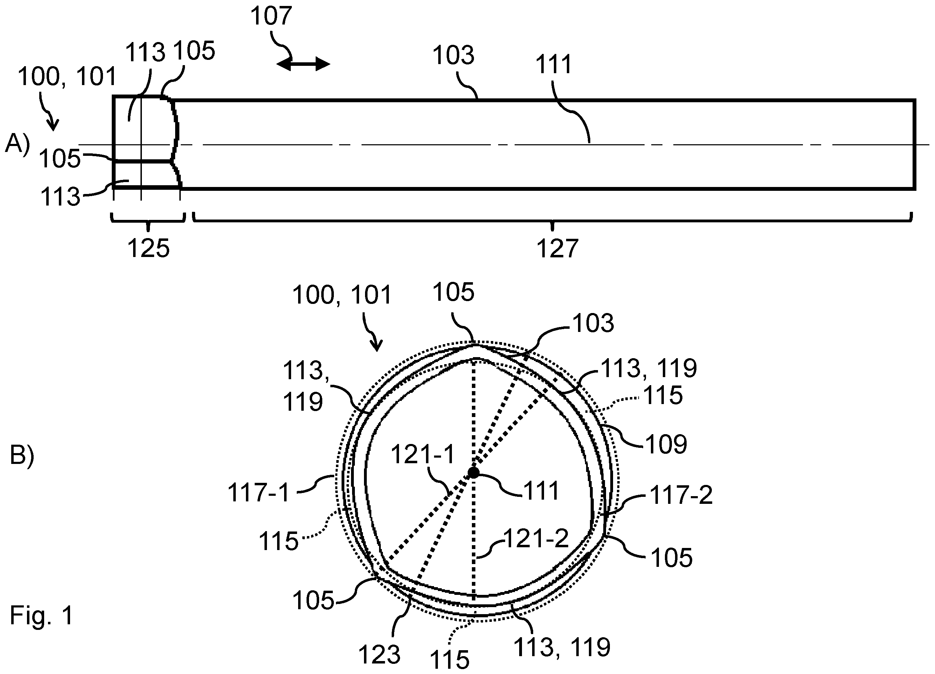

Die Figuren 1A und1B zeigen Ansichten mit unterschiedlichen Perspektiven eines rohrförmigen Verbindungsteils einer Fluidverbindungsanordnung gemäß einer Ausführungsform. In der Fig. 1A ist eine seitliche Darstellung des rohrförmigen Verbindungsteils 101 der Fluidverbindungsanordnung 100 gezeigt. In der Fig. 1B ist eine Querschnittsdarstellung des rohrförmigen Verbindungsteils 101 der Fluidverbindungsanordnung 100 gezeigt.

Das in den Figuren 1A und 1B dargestellte rohrförmige Verbindungsteil 101 ist zumindest abschnittsweise in einem Innenraum eines in den Figuren 1A und 1B nicht dargestellten Aufnahmeteils der Fluidverbindungsanordnung 100 angeordnet, wobei das rohrförmige Verbindungsteil 101 mit dem Aufnahmeteil verlötet ist, d.h. das rohrförmige Verbindungsteil 101 ist mit dem Aufnahmeteil durch eine stoffschlüssige Verbindung, insbesondere Lötverbindung, verbunden.

Die Fluidverbindungsanordnung 100 gemäß der vorliegenden Offenbarung dient zum Herstellen einer Fluidverbindung in einer Vielzahl von fluidführenden Systemen eines Fahrzeuges. Das Fluidverbindungsanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Das Fluidverbindungsanordnung 100 kann alternativ auch beispielsweise in Kühlmittel-führende Fluidleitungen, welche zur Kühlung von Batteriezellen in einem elektrisch angetriebenen Fahrzeug verwendet werden, eingesetzt werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch fluidtechnische Schnittstellen miteinander verbunden werden, um eine wirksame Fluidleitung sicherzustellen. Hierbei werden an die fluidtechnischen Schnittstellen zwischen einer entsprechenden fluidführenden Leitung und einem entsprechenden Verbindungsstück hohe Anforderungen in Bezug auf Stabilität und Fluiddichtigkeit gestellt.

Insbesondere bei der Verwendung von metallischen Bauteilen in entsprechenden Fluidverbindungsanordnungen 100 werden die fluidtechnischen Schnittstellen zwischen den metallische Bauteilen oftmals verlötet, um eine stabile Befestigung der metallischen Bauteile aneinander zu erreichen. In entsprechenden aus dem Stand der Technik bekannten Lötverbindungen zwischen metallischen Bauteilen kann oftmals keine ausreichende Fluiddichtigkeit zwischen den metallischen Bauteilen bereitgestellt werden.

In der Fluidverbindungsanordnung 100 gemäß der vorliegenden Offenbarung ist die stoffschlüssige Verbindung, insbesondere Lötverbindung, zwischen dem rohrförmigen Verbindungsteil 101 und dem Aufnahmeteil jedoch fluiddicht, so dass das Austreten von Flüssigkeit an der Verbindungsstelle zwischen den beiden Bauteilen verhindert wird.

Wie insbesondere aus der Fig. 1B hervorgeht, weist das rohrförmige Verbindungsteil 101 eine Rohrwandung 103 mit einem rotationssymmetrischen Querschnitt auf. Der rotationssymmetrische Querschnitt der Rohrwandung 103 zeichnet sich insbesondere dadurch aus, dass die Kontur der Rohrwandung bei einer Rotation um einen definierten Rotationswinkel, insbesondere 120°, wieder auf sich selbst abgebildet wird. Wie aus der Fig. 1B hervorgeht, weist der rotationssymmetrische Querschnitt der Rohrwandung 103 des rohrförmigen Verbindungsteils 101 jedoch insbesondere keine Kreisform auf, sondern ist vielmehr nicht konzentrisch.

Die Rohrwandung 103 des rohrförmigen Verbindungsteils 101 weist eine Mehrzahl von kammförmigen Stützstellen 105 auf, welche sich, wie aus der Fig. 1A ersichtlich ist, entlang einer Längsrichtung 107 des rohrförmigen Verbindungsteils 101 erstrecken.

Die kammförmigen Stützstellen 105 des rohrförmigen Verbindungsteils 101 kontaktieren eine in Fig. 1B nur schematisch dargestellte Aufnahmewandungsinnenseite 109 einer Aufnahmewandung eines Aufnahmeteils, um das rohrförmige Verbindungsteil 101 mit dem Aufnahmeteil zu verbinden. Insbesondere liegen die kammförmigen Stützstellen 105 kraftschlüssig an der Aufnahmewandungsinnenseite 109 der Rohrwandung an.

Aus der Fig. 1B geht hervor, dass die Rohrwandung 103 des rohrförmigen Verbindungsteils 101 eine Mehrzahl von, insbesondere drei, kammförmigen Stützstellen 105 aufweist, welche in Bezug auf die Mittelachse 111 des rohrförmigen Verbindungsteils 101 rotationssymmetrisch, insbesondere mit einem Rotationswinkel von 120°, angeordnet sind. Durch die rotationssymmetrische Anordnung der kammförmigen Stützstellen 105 kann eine wirksame umlaufende lagerichtige Fixierung des rohrförmigen Verbindungsteils 101 in dem Aufnahmeteil sichergestellt werden.

Wie aus der Fig. 1B ferner ersichtlich ist, weist die Rohrwandung 103 des rohrförmigen Verbindungsteils 101 eine Mehrzahl von, insbesondere drei, gekrümmte Wandungsbereiche 113 auf, wobei sich jeweils ein gekrümmter Wandungsbereich 113 zwischen zwei benachbarten kammförmigen Stützstellen 105 erstreckt.

Wie aus der Fig. 1B ferner ersichtlich ist, ist zwischen den gekrümmten Wandungsbereichen 113 des rohrförmigen Verbindungsteils 101 und der Aufnahmewandungsinnenseite 109 einer Aufnahmewandung eines Aufnahmeteils jeweils ein Spalt 115 angeordnet ist. Die Spalten 115 sind jeweils ausgebildet ein in Fig. 1A und Fig. 1B nicht dargestelltes Lot aufzunehmen, um eine stoffschlüssige und fluiddichte Verbindung zwischen der Aufnahmewandungsinnenseite 109 und dem jeweiligen gekrümmten Wandungsbereiche 113 sicherzustellen. Die Spalte 115 weisen insbesondere eine Halbmond-Form auf.

Aus der Fig. 1B geht hervor, dass die Rohrwandung 103 des rohrförmigen Verbindungsteils 101 eine Mehrzahl von, insbesondere drei, gekrümmte Wandungsbereiche 113 aufweist, welche in Bezug auf die Mittelachse 111 des rohrförmigen Verbindungsteils 101 rotationssymmetrisch, insbesondere mit einem Rotationswinkel von 120°, angeordnet sind. Durch die rotationssymmetrische Anordnung der gekrümmten Wandungsbereiche 113, bzw. der Spalten 115 kann eine wirksame umlaufende stoffschlüssige und fluiddichte Abdichtung zwischen dem rohrförmigen Verbindungsteil 101 und dem Aufnahmeteil sichergestellt werden.

Aus der Fig. 1B geht hervor, dass die kammförmigen Stützstellen 105 in Bezug auf die Mittelachse 111 des rohrförmigen Verbindungsteils 101 auf einem ersten Umfangskreis 117-1 des rohrförmigen Verbindungsteils 101 liegen, und dass jeweilige Mittenbereiche 119 der gekrümmten Wandungsbereiche 113 in Bezug auf die Mittelachse 111 des rohrförmigen Verbindungsteils 101 auf einem zweiten Umfangskreis 117-2 des rohrförmigen Verbindungsteils 101 liegen, wobei der erste Umfangskreis 117-1 einen ersten Kreisdurchmesser 121-1 aufweist, welcher größer als ein zweiter Kreisdurchmesser 121-2 des zweiten Umfangskreises 117-2 ist.

Aus der Fig. 1B geht ferner hervor, dass der erste Kreisdurchmesser 121-1 etwas größer ist als ein Innendurchmesser 123 der Aufnahmewandung eines Aufnahmeteils. Dies bedeutet, dass bei einem Einschieben des rohrförmigen Verbindungsteils 101 in das Aufnahmeteil, die kammförmigen Stützstellen 105 nach innen einfedern können und nach dem Einführen gegen die Aufnahmewandungsinnenseite 109 des Aufnahmeteils pressen und dadurch das rohrförmigen Verbindungsteil 101 bis zum Löten lagerichtig fixieren und somit ein Lösen der beiden Verbindungspartner als auch eine Verdrehung des rohrförmigen Verbindungsteils 101 verhindern.

Somit ist die Rohrwandung 103 des rohrförmigen Verbindungsteils 101 zumindest abschnittsweise nach innen verformbar, um das rohrförmige Verbindungsteil 101 in dem Aufnahmeteil aufzunehmen.

Aus der Fig. 1A ist ersichtlich, dass das rohrförmige Verbindungsteil 101 einen Einführabschnitt 125 aufweist, welcher vollständig in dem Innenraum des in Fig. 1A nicht dargestellten Aufnahmeteils aufgenommen ist, und wobei sich von dem Einführabschnitt 125 ein Außenabschnitt 127 erstreckt, welcher nicht in dem in Fig. 1A nicht dargestellten Aufnahmeteil aufgenommen ist.

Aus der Fig. 1A ist ersichtlich, dass der rotationssymmetrische Querschnitt des rohrförmigen Verbindungsteils 101 umfassend die kammförmigen Stützstellen 105 und die gekrümmten Wandungsbereichen 113 in dem Einführabschnitt 125 und nicht in dem Außenabschnitt 127 gebildet. Der Außenabschnitt 127 des rohrförmigen Verbindungsteils 101 weist einen konzentrischen Querschnitt auf.

Ferner weist die Rohrwandung 103 umfassend die kammförmigen Stützstellen 105 und die gekrümmten Wandungsbereiche 113, insbesondere die Rohrwandung 103 des Einführabschnitts 125, eine konstante Wandungsdicke auf.

Bei der Herstellung der Rohrwandung 103 umfassend die kammförmigen Stützstellen 105 und die gekrümmten Wandungsbereiche 113, insbesondere in dem Einführabschnitt 125, wird über einen Teil der Lotfläche nicht der Außendurchmesser der Rohrwandung 103 rotationssymmetrisch in einer Axialbewegung verringert, sondern die Rohrwandung 103, insbesondere in dem Einführabschnitt 125, wird partiell nach innen verformt und die in den Figuren 1A und 1B dargestellte polygone Form überführt. Die polygone Form wird hierbei von außen mittels partiellen Drucks ohne eine Relativbewegung zwischen Werkzeugen aufgebracht, so im Bereich der gekrümmten Wandungsbereiche 113 ein partielles Abplatten der Rohrwandung 103 erreicht wird.

Es treten hierbei geringere Umformkräfte auf, da keine Änderung der Wanddicke der Rohrwandung 103 auftritt. Somit entfällt eine herkömmlich notwendige Kalibrierung des Einführabschnitts 125 der Rohrwandung 103 mit einer Bördelmaschine, so dass sich ein geringer Herstellungsaufwand ergibt.

Ferner gibt es keine Relativbewegung zwischen dem Rohr und der Umformmatrize, so dass das Verschmutzungsrisiko verringert wird. Zudem entfällt ein Schmiervorgang der Bauteile und ein entsprechend notwendiger Waschprozess.

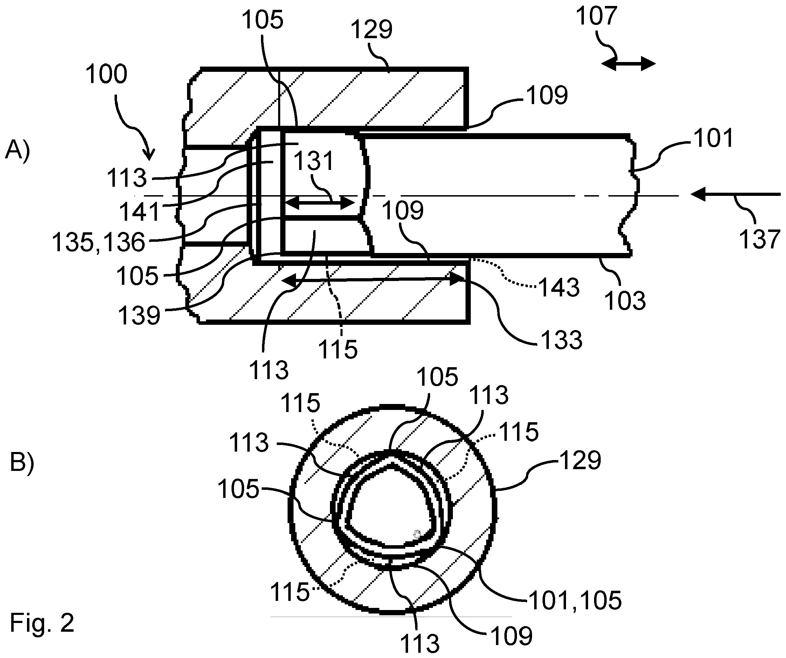

Die Figuren 2A und 2B zeigen Ansichten mit unterschiedlichen Perspektiven einer Fluidverbindungsanordnung mit einem rohrförmigen Verbindungsteils und einem Aufnahmeteil gemäß einer Ausführungsform.

Die in den Figuren 2A und 2B dargestellte Fluidverbindungsanordnung 100 umfasst das in Fig. 1 dargestellte rohrförmige Verbindungsteil 101, welches zumindest abschnittsweise in dem Innenraum eines Aufnahmeteils 129 aufgenommen ist.

Die Rohrwandung 103 des rohrförmigen Verbindungsteils 101 weist eine Mehrzahl von, insbesondere drei, kammförmigen Stützstellen 105 auf, welche sich entlang der Längsrichtung 107 des rohrförmigen Verbindungsteils 101 erstrecken. Die kammförmigen Stützstellen 105 kontaktieren die Aufnahmewandungsinnenseite 109 des Aufnahmeteils 129.

Die Rohrwandung 103 des rohrförmigen Verbindungsteils 101 weist ferner eine Mehrzahl von, insbesondere drei, gekrümmten Wandungsbereichen 113 auf, welche sich jeweils zwischen zwei benachbarten kammförmigen Stützstellen 105 erstrecken.

Zwischen dem jeweiligen gekrümmten Wandungsbereich 113 und der Aufnahmewandungsinnenseite 109 des Aufnahmeteils 129 ist jeweils ein Spalt 115 angeordnet, welcher ausgebildet ist, ein in Fig. 2A und 2B nicht dargestelltes Lot aufzunehmen, um eine stoffschlüssige Verbindung zwischen der Aufnahmewandungsinnenseite 109 des Aufnahmeteils 129 und den gekrümmten Wandungsbereichen 113 des rohrförmigen Verbindungsteils 101 sicherzustellen.

Wie in der Fig. 2A lediglich schematisch dargestellt ist, ist insbesondere eine Länge 131 der kammförmigen Stützstellen 105 entlang der Längsrichtung 107 des rohrförmigen Verbindungsteils 101 geringer als eine Länge 133 der Spalten 115 entlang der Längsrichtung 107 des rohrförmigen Verbindungsteils 101.

Dadurch ist sichergestellt, dass das Lot, welches durch die Spalte 115 durch die Kapillarkraft nach oben gezogen wird, oberhalb der Spalten 115 zusammenläuft und den verbleibenden Spalt 115 füllt und somit eine druckbeständige stoffschlüssige und fluiddichte Verbindung zwischen dem rohrförmigen Verbindungsteil 101 und dem Aufnahmeteil 129 sicherstellt.

Aus der Fig. 2A geht ferner hervor, dass eine Wandungsendseite 136 der Aufnahmewandung 135 des Aufnahmeteils 129 den Innenraum des Aufnahmeteils 129 begrenzt, wobei die Wandungsendseite 136 den Innenraum des Aufnahmeteils 129 quer zu einer Einschubrichtung 137 des rohrförmigen Verbindungsteils 101 in das Aufnahmeteil 129 abschließt. Die Wandungsendseite 136 ist mit der Aufnahmewandungsinnenseite 109 verbunden. Somit umschließen die Wandungsendseite 136 und die Aufnahmewandungsinnenseite 109 das aufgenommene rohrförmige Verbindungsteil 101.

Zwischen der Aufnahmewandung 135, insbesondere einer Wandungsendseite 136 der Aufnahmewandung 135, und einer Stirnseite 139 des in das Aufnahmeteil 129 eingeführten rohrförmigen Verbindungsteils 101 ist ein Hohlraum 141 zum Aufnehmen von Lot geformt. Nach dem Erwärmen des in dem Hohlraum 141 aufgenommenen Lots dringt das dadurch aufgeschmolzene Lot durch die auftretenden Kapillarkräfte in die Spalten 115 ein. Nach Abkühlen der Fluidverbindungsanordnung 100 und dem Aushärten des Lots wird eine stoffschlüssige und fluiddichte Verbindung zwischen der Aufnahmewandungsinnenseite 109 des Aufnahmeteils 129 und der Rohrwandung 103 des rohrförmigen Verbindungsteils 101 sichergestellt.

Das Aufnahmeteil 129, insbesondere die Aufnahmewandung 135 des Aufnahmeteils 129, weist eine Einschuböffnung 143 auf, durch welche das rohrförmige Verbindungsteils 101 in den Innenraum des Aufnahmeteils 129 eingeschoben wird.

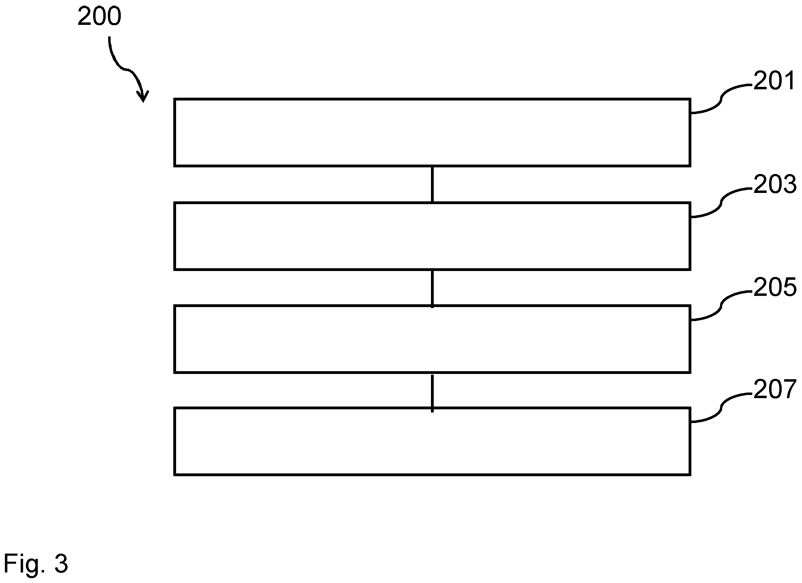

Fig. 3 zeigt ein Verfahren zum Herstellen einer Fluidverbindunganordnung gemäß einer Ausführungsform.

Das Verfahren 200 umfasst als ersten Schritt das Bereitstellen 201 eines Aufnahmeteils 129, welches eine Aufnahmewandung 135 aufweist, wobei die Aufnahmewandung 135 eine Aufnahmewandungsinnenseite 109 aufweist, welche einen Innenraum des Aufnahmeteils 129 begrenzt.

Das Verfahren 200 umfasst als zweiten Schritt das Bereitstellen 203 eines rohrförmigen Verbindungsteils 101, welches eine Rohrwandung 103 aufweist, wobei die Rohrwandung 103 eine Mehrzahl von kammförmigen Stützstellen 105 aufweist, welche sich entlang einer Längsrichtung 107 des rohrförmigen Verbindungsteils 101 erstrecken, wobei die Rohrwandung 103 zumindest einen gekrümmten Wandungsbereich 113 aufweist, welcher sich zwischen zwei benachbarten kammförmigen Stützstellen 105 erstreckt.

Das Verfahren 200 umfasst als dritten Schritt das zumindest abschnittsweise Einführen 205 des rohrförmigen Verbindungsteils 101 in den Innenraum des Aufnahmeteils 129, wobei die kammförmigen Stützstellen 105 des rohrförmigen Verbindungsteils 101 nach dem Einführen 205 die Aufnahmewandungsinnenseite 109 kontaktieren, und wobei nach dem Einführen 205 zwischen dem zumindest einen gekrümmten Wandungsbereich 113 und der Aufnahmewandungsinnenseite 109 zumindest ein Spalt 115 angeordnet ist.

Das Verfahren 200 umfasst als vierten Schritt das Verlöten 207 der Rohrwandung 103 des rohrförmigen Verbindungsteils 101 mit der Aufnahmewandung 135 des Aufnahmeteils 129, wobei ein während des Verlötens 207 gebildetes Lot in den Spalt 115 aufgenommen wird, um eine stoffschlüssige und fluiddichte Verbindung zwischen der Aufnahmewandungsinnenseite 109 und dem gekrümmten Wandungsbereich 113 sicherzustellen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidverbindungsanordnung
- 101: Rohrförmiges Verbindungsteil
- 103: Rohrwandung
- 105: Kammförmige Stützstellen
- 107: Längsrichtung des rohrförmigen Verbindungsteils
- 109: Aufnahmewandungsinnenseite
- 111: Mittelachse des rohrförmigen Verbindungsteils
- 113: Gekrümmter Wandungsbereich
- 115: Spalt
- 117-1: Erster Umfangskreis
- 117-2: Zweiter Umfangskreis
- 119: Mittenbereich des gekrümmten Wandungsbereichs
- 121-1: Erster Kreisdurchmesser
- 121-2: Zweiter Kreisdurchmesser
- 123: Innendurchmesser des Außenteils
- 125: Einführabschnitt des rohrförmigen Verbindungsteils
- 127: Außenabschnitt des rohrförmigen Verbindungsteils
- 129: Aufnahmeteil
- 131: Länge einer kammförmigen Stützstelle
- 133: Länge eines Spaltes
- 135: Aufnahmewandung des Aufnahmeteils
- 136: Wandungsendseite
- 137: Einschubrichtung des rohrförmigen Verbindungsteils in das Aufnahmeteil
- 139: Stirnseite des rohrförmigen Verbindungsteils
- 141: Hohlraum
- 143: Einschuböffnung
- 200: Verfahren zum Herstellen einer Fluidverbindungsanordnung
- 201: Erster Verfahrensschritt: Bereitstellen eines Aufnahmeteils
- 203: Zweiter Verfahrensschritt: Bereitstellen eines rohrförmigen Verbindungsteils
- 205: Dritter Verfahrensschritt: Zumindest abschnittsweises Einführen des rohrförmigen Verbindungsteils in das Aufnahmeteil
- 207: Vierter Verfahrensschritt: Verlöten der Rohrwandung mit der Aufnahmewandung

## Patentansprüche

1. Fluidverbindungsanordnung (100) zum Herstellen einer Fluidverbindung, mit:
einem Aufnahmeteil (129), welches eine Aufnahmewandung (135) aufweist, wobei die Aufnahmewandung (135) eine Aufnahmewandungsinnenseite (109) aufweist, welche einen Innenraum des Aufnahmeteils (129) begrenzt,
einem rohrförmigen Verbindungsteil (101), welches zumindest abschnittsweise in dem Innenraum des Aufnahmeteils (129) aufgenommen ist, und welches eine Rohrwandung (103) aufweist,
wobei die Rohrwandung (103) eine Mehrzahl von kammförmige Stützstellen (105) aufweist, welche sich entlang einer Längsrichtung (107) des rohrförmigen Verbindungsteils (101) erstrecken, wobei die kammförmigen Stützstellen (105) die Aufnahmewandungsinnenseite (109) kontaktieren,
wobei die Rohrwandung (103) zumindest einen gekrümmten Wandungsbereich (113) aufweist, welcher sich zwischen zwei benachbarten kammförmigen Stützstellen (105) erstreckt,
wobei zwischen dem zumindest einen gekrümmten Wandungsbereich (113) des rohrförmigen Verbindungsteils (101) und der Aufnahmewandungsinnenseite (109) des Aufnahmeteils (129) zumindest ein Spalt (115) angeordnet ist, wobei in dem Spalt (115) ein Lot aufgenommen ist, um eine stoffschlüssige und fluiddichte Verbindung zwischen der Aufnahmewandungsinnenseite (109) und dem gekrümmten Wandungsbereich (113) sicherzustellen,
wobei die Rohrwandung (103) drei kammförmige Stützstellen (105) aufweist, welche in Bezug auf eine Mittelachse (111) des rohrförmigen Verbindungsteils (101) rotationsymmetrisch angeordnet sind, **dadurch gekennzeichnet, dass** der zumindest eine Spalt (115) eine Halbmondform aufweist, und wobei jeweils benachbarte kammförmige Stützstellen (105) mit der Mittelachse (111) des rohrförmigen Verbindungsteils (101) einen Rotationswinkel von 120° einschließen.

2. Fluidverbindungsanordnung (100) nach Anspruch 1, wobei die kammförmigen Stützstellen (105) beim Einführen des rohrförmigen Verbindungsteils (101) in das Aufnahmeteil (129) zumindest abschnittsweise nach innen verformbar sind, um das rohrförmige Verbindungsteil (101) in dem Aufnahmeteil (129) aufzunehmen, und/oder wobei die kammförmigen Stützstellen (105) des in dem Aufnahmeteil (129) aufgenommenen rohrförmigen Verbindungsteils (101) ausgebildet sind, die Aufnahmewandungsinnenseite (109) des Aufnahmeteils (129) mit einer Kraft zu beaufschlagen.

3. Fluidverbindungsanordnung (100) nach Anspruch 1 oder 2, wobei eine Mehrzahl von gekrümmten Wandungsbereichen (113) in Bezug auf eine Mittelachse (111) des rohrförmigen Verbindungsteils (101) rotationssymmetrisch angeordnet sind.

4. Fluidverbindungsanordnung (100) nach einem der vorangehenden Ansprüche, wobei die kammförmigen Stützstellen (105) in Bezug auf die Mittelachse (111) des rohrförmigen Verbindungsteils (101) auf einem ersten Umfangskreis (117-1) des rohrförmigen Verbindungsteils (101) liegen, wobei jeweilige Mittenbereiche (119) einer Mehrzahl von gekrümmten Wandungsbereiche (113) in Bezug auf die Mittelachse (111) des rohrförmigen Verbindungsteils (101) auf einem zweiten Umfangskreis (117-2) des rohrförmigen Verbindungsteils (101) liegen, wobei der erste Umfangskreis (117-1) einen ersten Kreisdurchmesser (121-1) aufweist, welcher größer als ein zweiter Kreisdurchmesser (121-2) des zweiten Umfangskreises (117-2) ist.

5. Fluidverbindungsanordnung (100) nach einem der vorangehenden Ansprüche, wobei eine Länge (131) der kammförmigen Stützstellen (105) entlang der Längsrichtung (107) des rohrförmigen Verbindungsteils (101) geringer als eine Länge (133) des zumindest einen Spalts (115) entlang der Längsrichtung (107) des rohrförmigen Verbindungsteils (101) ist.

6. Fluidverbindungsanordnung (100) nach einem der vorangehenden Ansprüche, wobei das rohrförmige Verbindungsteil (101) einen Einführabschnitt (125) aufweist, welcher vollständig in dem Innenraum des Aufnahmeteils (129) aufgenommen ist, wobei der Einführabschnitt (125) mit einem Außenabschnitt (127) des rohrförmigen Verbindungsteils (101) verbunden ist, welcher sich von dem Einführabschnitt (125) aus erstreckt, wobei die kammförmigen Stützstellen (105) und der zumindest eine gekrümmte Wandungsbereich (113) der Rohrwandung (103) in dem Einführabschnitt (125) angeordnet sind, und wobei die Rohrwandung (103) des Außenabschnitts (127) insbesondere einen konzentrischen Querschnitt aufweist.

7. Fluidverbindungsanordnung (100) nach einem der vorangehenden Ansprüche, wobei die Aufnahmewandung (135), welche den Innenraum des Aufnahmeteils (129) begrenzt, eine Wandungsendseite (136) aufweist, welche den Innenraum quer zu einer Einschubrichtung (137) des rohrförmigen Verbindungsteils (101) abschließt, wobei zwischen der Wandungsendseite (136) und einer Stirnseite (139) des eingeführten rohrförmigen Verbindungsteils (101) ein Hohlraum (141) zum Aufnehmen eines Lots geformt ist.

8. Verfahren (200) zum Herstellen einer Fluidverbindunganordnung (100), umfassend die folgenden Verfahrensschritte:
Bereitstellen (201) eines Aufnahmeteils (129), welches eine Aufnahmewandung (135) aufweist, wobei die Aufnahmewandung (135) eine Aufnahmewandungsinnenseite (109) aufweist, welche einen Innenraum des Aufnahmeteils (129) begrenzt,
Bereitstellen (203) eines rohrförmigen Verbindungsteils (101), welches eine Rohrwandung (103) aufweist, wobei die Rohrwandung (103) eine Mehrzahl von kammförmigen Stützstellen (105) aufweist, welche sich entlang einer Längsrichtung (107) des rohrförmigen Verbindungsteils (101) erstrecken, wobei die Rohrwandung (103) zumindest einen gekrümmten Wandungsbereich (113) aufweist, welcher sich zwischen zwei benachbarten kammförmigen Stützstellen (105) erstreckt,
Zumindest abschnittsweises Einführen (205) des rohrförmigen Verbindungsteils (101) in den Innenraum des Aufnahmeteils (129), wobei die kammförmigen Stützstellen (105) des rohrförmigen Verbindungsteils (101) nach dem Einführen (205) die Aufnahmewandungsinnenseite (109) kontaktieren, und wobei nach dem Einführen (205) zwischen dem zumindest einen gekrümmten Wandungsbereich (113) und der Aufnahmewandungsinnenseite (109) zumindest ein Spalt (115) angeordnet ist, und
Verlöten (207) der Rohrwandung (103) des rohrförmigen Verbindungsteils (101) mit der Aufnahmewandung (135) des Aufnahmeteils (129), wobei ein während des Verlötens (207) gebildetes Lot in den Spalt (115) aufgenommen wird, um eine stoffschlüssige und fluiddichte Verbindung zwischen der Aufnahmewandungsinnenseite (109) und dem gekrümmten Wandungsbereich (113) sicherzustellen,
wobei die Rohrwandung (103) drei kammförmige Stützstellen (105) aufweist, welche in Bezug auf eine Mittelachse (111) des rohrförmigen Verbindungsteils (101) rotationsymmetrisch angeordnet sind, **dadurch gekennzeichnet, dass** der zumindest eine Spalt (115) eine Halbmondform aufweist und wobei jeweils benachbarte kammförmige Stützstellen (105) mit der Mittelachse (111) des rohrförmigen Verbindungsteils (101) einen Rotationswinkel von 120° einschließen.

9. Verfahren (200) nach Anspruch 8, wobei das Bereitstellen (203) des rohrförmigen Verbindungsteils (101) eine Pressumformung eines rohrförmigen Vorläufers mit konzentrischem Querschnitt umfasst, um eine Rohrwandung (103) mit einem rotationssymmetrischen Querschnitt umfassend die kammförmigen Stützstellen (105) und den zumindest einen gekrümmten Wandungsbereich (113) zu erhalten, wobei die Pressumformung insbesondere das umfangseitige Einwirken von eine Mehrzahl von Backen eines Umformungswerkzeugs auf den rohrförmigen Vorläufer umfasst.

10. Verfahren (200) nach Anspruch 8 oder 9, wobei das Verlöten (207) das Erhitzen des rohrförmigen Verbindungsteils (101) und/oder des Aufnahmeteils (129) umfasst, um ein zwischen dem rohrförmigen Verbindungsteil (101) und dem Aufnahmeteil (129) angeordnetes Lot zu schmelzen, wobei das geschmolzene Lot während des Verlötens (207) in den Spalt (115) aufgenommen wird, und ausgebildet ist, nach dem Aushärten des Lots die Rohrwandung (103) des rohrförmigen Verbindungsteil (101) mit der Aufnahmewandung (135) des Aufnahmeteils (129) durch die entstehende Lötverbindung fluiddicht zu verbinden.

## Claims

1. Fluid connection arrangement (100) for establishing a fluid connection, comprising:
a receiving part (129), which has a receiving wall (135), wherein the receiving wall (135) has a receiving wall inner side (109), which delimits an interior of the receiving part (129),
a tubular connecting part (101), which is received at least partially in the interior of the receiving part (129), and which comprises a tube wall (103),
wherein the tube wall (103) has a plurality of comb-shaped support points (105), which extend along a longitudinal direction (107) of the tubular connecting part (101), wherein the comb-shaped support points (105) contact the receiving wall inner side (109),
wherein the tube wall (103) has at least one curved wall area (113), which extends between two adjacent comb-shaped support points (105),
wherein at least one gap (115) is arranged between the at least one curved wall area (113) of the tubular connecting part (101) and the receiving wall inner side (109) of the receiving part (129), wherein a solder is received in the gap (115) in order to provide a materially bonded and fluid-tight connection between the receiving wall inner side (109) and the curved wall area (113),
wherein the tube wall (103) has three comb-shaped support points (105), which are arranged rotationally symmetrically with respect to a central axis (111) of the tubular connecting part (101), **characterized in that** the at least one gap (115) has a crescent shape, and wherein adjacent comb-shaped support points (105) respectively enclose a rotation angle of 120° with the central axis (111) of the tubular connecting part (101).

2. Fluid connection arrangement (100) according to claim 1, wherein, when inserting the tubular connecting part (101) into the receiving part (129), the comb-shaped support points (105) are at least partially inwardly deformable in order to receive the tubular connecting part (101) in the receiving part (129), and/or wherein the comb-shaped support points (105) of the tubular connecting part (101) received in the receiving part (129) are adapted to apply a force to the receiving wall inner side (109) of the receiving part (129).

3. Fluid connection arrangement (100) according to claim 1 or 2, wherein a plurality of curved wall areas (113) are arranged rotationally symmetrically with respect to a central axis (111) of the tubular connecting part (101).

4. Fluid connection arrangement (100) according to one of the preceding claims, wherein the comb-shaped support points (105) lie on a first circumferential circle (117-1) of the tubular connecting part (101) with respect to the central axis (111) of the tubular connecting part (101), wherein respective central areas (119) of a plurality of curved wall areas (113) lie on a second circumferential circle (117-2) of the tubular connecting part (101) with respect to the central axis (111) of the tubular connecting part (101), wherein the first circumferential circle (117-1) has a first circular diameter (121-1), which is greater than a second circular diameter (121-2) of the second circumferential circle (117-2).

5. Fluid connection arrangement (100) according to one of the preceding claims, wherein a length (131) of the comb-shaped support points (105) along the longitudinal direction (107) of the tubular connecting part (101) is less than a length (133) of the at least one gap (115) along the longitudinal direction (107) of the tubular connecting part (101).

6. Fluid connection arrangement (100) according to one of the preceding claims, wherein the tubular connecting part (101) has an insertion section (125) which is completely received in the interior of the receiving part (129), wherein the insertion section (125) is connected to an outer section (127) of the tubular connecting part (101) which extends from the insertion section (125), wherein the comb-shaped support points (105) and the at least one curved wall area (113) of the tube wall (103) are arranged in the insertion section (125), and wherein the tube wall (103) of the outer section (127) in particular has a concentric cross section.

7. Fluid connection arrangement (100) according to one of the preceding claims, wherein the receiving wall (135) which delimits the interior of the receiving part (129) has a wall end side (136), which closes off the interior transversely to an insertion direction (137) of the tubular connecting part (101), wherein a cavity (141) for receiving a solder is formed between the wall end side (136) and an end face (139) of the inserted tubular connecting part (101).

8. A method (200) for producing a fluid connection arrangement (100), comprising the following method steps:
providing (201) a receiving part (129), which has a receiving wall (135), wherein the receiving wall (135) has a receiving wall inner side (109), which delimits an interior of the receiving part (129),
providing (203) a tubular connecting part (101), which has a tube wall (103), wherein the tube wall (103) has a plurality of comb-shaped support points (105), which extend along a longitudinal direction (107) of the tubular connecting part (101), wherein the tube wall (103) has at least one curved wall area (113), which extends between two adjacent comb-shaped support points (105),
at least partially inserting (205) the tubular connecting part (101) into the interior of the receiving part (129), wherein the comb-shaped supporting points (105) of the tubular connecting part (101) contact the receiving wall inner side (109) after insertion (205), and wherein, after inserting (205), at least one gap (115) is arranged between the at least one curved wall area (113) and the receiving wall inner side (109), and
soldering (207) the tube wall (103) of the tubular connecting part (101) to the receiving wall (135) of the receiving part (129), wherein a solder formed during the soldering (207) is received in the gap (115) in order to ensure a materially bonded and fluid-tight connection between the receiving wall inner side (109) and the curved wall area (113),
wherein the tube wall (103) has three comb-shaped support points (105), which are arranged rotationally symmetrically with respect to a central axis (111) of the tubular connecting part (101), **characterized in that** the at least one gap (115) has a crescent shape, and wherein adjacent comb-shaped support points (105) respectively enclose a rotation angle of 120° with the central axis (111) of the tubular connecting part (101).

9. The method (200) according to claim 8, wherein the providing (203) of the tubular connecting part (101) comprises a press forming of a tubular precursor with a concentric cross-section in order to obtain a tube wall (103) with a rotationally symmetrical cross-section comprising the comb-shaped support points (105) and the at least one curved wall area (113), wherein the press forming in particular comprises the circumferential action of a plurality of jaws of a forming tool on the tubular precursor.

10. The method (200) according to claim 8 or 9, wherein the soldering (207) comprises heating the tubular connecting part (101) and/or the receiving part (129) in order to melt a solder arranged between the tubular connecting part (101) and the receiving part (129), wherein the molten solder is received in the gap (115) during the soldering (207) and is adapted to connect the tube wall (103) of the tubular connecting part (101) to the receiving wall (135) of the receiving part (129) in a fluid-tight manner by the resulting soldered connection after the solder has hardened.

## Revendications

1. Agencement de connexion fluidique (100) pour établir une connexion fluidique, comprenant :
une partie réceptrice (129) qui présente une paroi réceptrice (135), la paroi réceptrice (135) présentant un côté intérieur de paroi réceptrice (109) qui délimite un intérieur de la partie réceptrice (129),
une pièce de raccordement tubulaire (101) qui est reçue au moins partiellement à l'intérieur de la pièce de réception (129) et qui comprend une paroi tubulaire (103),
la paroi de tube (103) comportant une pluralité de points de support en forme de peigne (105) qui s'étendent le long d'une direction longitudinale (107) de la partie de connexion tubulaire (101), les points de support en forme de peigne (105) étant en contact avec la côté intérieur de la paroi de réception (109),
dans lequel la paroi tubulaire (103) présente au moins une zone de paroi incurvée (113) qui s'étend entre deux points de support adjacents en forme de peigne (105),
dans lequel au moins un espace (115) est disposé entre la au moins une zone de paroi incurvée (113) de la partie de connexion tubulaire (101) et le côté interne de la paroi de réception (109) de la partie de réception (129), dans lequel une soudure est reçu dans l'espace (115) afin de fournir une connexion matériellement liée et étanche aux fluides entre le côté intérieur de la paroi de réception (109) et la zone de paroi incurvée (113),
dans lequel la paroi tubulaire (103) présente trois points d'appui (105) en forme de peigne, qui sont disposés de manière symétrique en rotation par rapport à un axe central (111) de la pièce de raccordement tubulaire (101), **caractérisé en ce que** l'au moins un espace (115) a une forme de croissant, et dans lequel des points de support adjacents en forme de peigne (105) enferment respectivement un angle de rotation de 120° avec l'axe central (111) de la partie de connexion tubulaire (101).

2. Agencement de connexion fluidique (100) selon la revendication 1, dans lequel, lors de l'insertion de la pièce tubulaire de liaison (101) dans la pièce de réception (129), les points d'appui en forme de peigne (105) sont au moins partiellement déformables vers l'intérieur afin de recevoir la pièce de raccordement tubulaire (101) dans la pièce de réception (129), et/ou dans lequel les points d'appui en forme de peigne (105) de la pièce de raccordement tubulaire (101) reçue dans la pièce de réception (129) sont adaptés pour appliquer une force sur le côté intérieur de la paroi réceptrice (109) de la partie réceptrice (129).

3. Agencement de connexion fluidique (100) selon la revendication 1 ou 2, dans lequel une pluralité de zones de paroi incurvées (113) sont disposées de manière symétrique en rotation par rapport à un axe central (111) de la pièce de connexion tubulaire (101).

4. Agencement de connexion fluidique (100) selon l'une des revendications précédentes, dans lequel les points d'appui en forme de peigne (105) s'étendent sur un premier cercle circonférentiel (117-1) de la pièce tubulaire de raccordement (101) par rapport à l'axe central axe (111) de la partie de connexion tubulaire (101), dans lequel des zones centrales respectives (119) d'une pluralité de zones de paroi incurvées (113) se trouvent sur un deuxième cercle circonférentiel (117-2) de la partie de connexion tubulaire (101) avec par rapport à l'axe central (111) de la partie de connexion tubulaire (101), le premier cercle circonférentiel (117-1) ayant un premier diamètre circulaire (121-1), qui est supérieur à un deuxième diamètre circulaire (121-2) du deuxième cercle circonférentiel (117-2).

5. Agencement de connexion fluidique (100) selon l'une des revendications précédentes, dans lequel une longueur (131) des points d'appui en forme de peigne (105) le long de la direction longitudinale (107) de la pièce de connexion tubulaire (101) est inférieure à une longueur (133) du ou des espaces (115) le long de la direction longitudinale (107) de la partie de connexion tubulaire (101).

6. Agencement de connexion fluidique (100) selon l'une des revendications précédentes, dans lequel la pièce de connexion tubulaire (101) présente une section d'insertion (125) qui est complètement reçue à l'intérieur de la pièce de réception (129), dans laquelle la section d'insertion (125) est relié à une section externe (127) de la partie de connexion tubulaire (101) qui s'étend à partir de la section d'insertion (125), les points de support en forme de peigne (105) et la au moins une zone de paroi incurvée (113) de la paroi tubulaire (103) sont disposés dans la section d'insertion (125), et la paroi tubulaire (103) de la section extérieure (127) présente en particulier une section transversale concentrique.

7. Agencement de connexion fluidique (100) selon l'une des revendications précédentes, dans lequel la paroi de réception (135) qui délimite l'intérieur de la partie de réception (129) présente une paroi latérale d'extrémité (136), qui ferme l'intérieur transversalement à une direction d'insertion (137) de la partie de connexion tubulaire (101), dans laquelle une cavité (141) destinée à recevoir une soudure est formée entre le côté d'extrémité de paroi (136) et une face d'extrémité (139) de la partie de connexion tubulaire insérée (101).

8. Procédé (200) de réalisation d'un agencement de connexion fluidique (100), comprenant les étapes de procédé suivantes :
prévoir (201) une partie réceptrice (129), qui comporte une paroi réceptrice (135), la paroi réceptrice (135) présentant un côté intérieur de paroi réceptrice (109), qui délimite un intérieur de la partie réceptrice (129),
prévoir (203) une partie de connexion tubulaire (101), qui possède une paroi de tube (103), la paroi de tube (103) comportant une pluralité de points de support en forme de peigne (105), qui s'étendent le long d'une direction longitudinale (107). de la pièce de raccordement tubulaire (101), dans laquelle la paroi tubulaire (103) présente au moins une zone de paroi incurvée (113) qui s'étend entre deux points d'appui adjacents en forme de peigne (105),
insérer au moins partiellement (205) la partie de connexion tubulaire (101) à l'intérieur de la partie de réception (129), les points de support en forme de peigne (105) de la partie de connexion tubulaire (101) étant en contact avec le côté intérieur de la paroi de réception (129) après l'insertion (205), et dans lequel, après l'insertion (205), au moins un espace (115) est disposé entre la au moins une zone de paroi incurvée (113) et le côté intérieur de la paroi de réception (109), et
souder (207) la paroi tubulaire (103) de la pièce de raccordement tubulaire (101) à la paroi de réception (135) de la pièce de réception (129), une soudure formée lors du brasage (207) étant reçue dans l'espace (115) afin d'assurer une liaison matériellement collée et étanche aux fluides entre le côté intérieur de la paroi de réception (109) et la zone de paroi incurvée (113),
dans lequel la paroi tubulaire (103) présente trois points d'appui (105) en forme de peigne, qui sont disposés de manière symétrique en rotation par rapport à un axe central (111) de la pièce de raccordement tubulaire (101), **caractérisé en ce que** l'au moins un espace (115) a une forme de croissant, et dans lequel des points de support adjacents en forme de peigne (105) enferment respectivement un angle de rotation de 120° avec l'axe central (111) de la partie de connexion tubulaire (101).

9. Procédé (200) selon la revendication 8, dans lequel la fourniture (203) de la pièce de liaison tubulaire (101) comprend un formage sous presse d'un précurseur tubulaire de section concentrique afin d'obtenir une paroi de tube (103) avec une section transversale à symétrie de rotation comprenant les points d'appui en forme de peigne (105) et la au moins une zone de paroi incurvée (113), le formage à la presse comprenant en particulier l'action circonférentielle d'une pluralité de mâchoires d'un outil de formage sur le précurseur tubulaire.

10. Procédé (200) selon la revendication 8 ou 9, dans lequel la soudure (207) comprend le chauffage de la pièce tubulaire de liaison (101) et/ou de la pièce réceptrice (129) afin de faire fondre une soudure disposée entre la pièce tubulaire de liaison (101) et la partie de réception (129), la soudure fondue étant reçue dans l'espace (115) pendant le brasage (207) et étant adaptée pour relier la paroi de tube (103) de la partie de connexion tubulaire (101) à la paroi de réception (135) de la pièce de réception (129) de manière étanche aux fluides grâce à la connexion soudée résultante après le durcissement de la soudure.
